# EUROPÄISCHE PATENTSCHRIFT

(11) **EP 3 222 507 B1**
(45) Veröffentlichungstag und Bekanntmachung des Hinweises auf die Patenterteilung: **10.07.2024**
(21) Anmeldenummer: 17161842.4
(22) Anmeldetag: 20.03.2017
(51) Int. Cl.: B62K 21/26

(54) **DOWNHILL-FAHRRADGRIFF**
DOWNHILL BICYCLE HANDLE
POIGNÉE DE VÉLO DE DESCENTE

(30) Priorität: 24.03.2016 DE 202016001959 U
(43) Veröffentlichungstag der Anmeldung: 27.09.2017
(73) Patentinhaber: Ergon International GmbH, 56070 Koblenz (DE)
(72) Erfinder: Krause, Andreas, 56068 Koblenz (DE); Vollmer, Christian, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 2 840 015
- EP-A2- 1 464 571
- DE-C- 375 778
- DE-U1- 202013 007 448
- FR-E- 13 763
- JP-A- 2012 240 438
- US-A- 2 205 769
- US-A1- 2003 192 395
- US-A1- 2010 212 453
- US-A1- 2014 116 196

## Beschreibung

Die Erfindung betrifft einen Downhill-Fahrradgriff.

Beim Downhill-Fahrradfahren ist ein sicheres Greifen der mit dem Lenker verbunden Fahrradgriffe von besonders hoher Bedeutung. Um eine hohe Greifkraft aufbringen zu können und somit ein sicheres Halten des Fahrrades zu gewährleisten sind derartige Fahrradgriffe üblicherweise zylindrisch ausgestaltet. Um ein Verdrehen zu vermeiden weisen derartige Fahrradgriffe schellenartige Klemmelemente sowohl an der Innen- als auch an der Außenseite auf. Die Oberfläche der Greifelemente bekannte Downhill-Fahrradgriffe ist gegebenenfalls stark strukturiert, um den Halt weiter zu verbessern. Insbesondere bei langen Downhill-Abfahrten besteht die Problematik, dass die Greifkraft des Fahrers nachlässt.

Aus EP 2 840 015 ist ein Enduro-Fahrradgriff bekannt. Dieser ist unsymmetrisch ausgebildet und weist an seiner Innenseite ein schellenartiges Fixierelement auf. An der im montierten Zustand äußeren Seite ist der Fahrradgriff an seiner Oberseite verdickt ausgebildet.

Aufgabe der Erfindung ist es, einen verbesserten Downhill-Fahrradgriff zu schaffen.

Die Lösung der Aufgabe erfolgt erfindungsgemäß durch die Merkmale des Anspruchs 1.

Der erfindungsgemäße Downhill-Fahrradgriff weist eine Innenhülse auf. Die Innenhülse ist üblicherweise aus hartem Kunststoffmaterial hergestellt, wobei die Innenhülse einen Innendurchmesser aufweist, der im Wesentlichen in dem Außendurchmesser des Lenkers entspricht, so dass der Fahrradgriff mit der Innenhülse auf den Lenker aufgesteckt werden kann. Hierbei ist die Innenhülse vorzugsweise zylindrisch ausgebildet, wobei sich die Innenhülse zumindest partiell nur teilweise um den gesamten Umfang erstrecken kann und/oder sich die Innenhülse nicht über die gesamte Länge des Fahrradgriffs erstreckt.

Die Innenhülse ist von einem Greifelement aus weicherem Kunststoffmaterial umgeben. Ferner ist ein Fixierelement vorgesehen, um die Innenhülse und damit den gesamten Fahrradgriff am Fahrradlenker zu fixieren. Hierbei ist es bevorzugt, dass das Fixierelement ähnlich eines Klemmelements ausgebildet ist und zumindest einen Teil der Innenhülse in Umfangsrichtung umgibt.

Die Innenhülse weist einen Klemmbereich auf, der in Längsrichtung des Fahrradgriffs beispielsweise eine Breite von 5 bis 15 mm, insbesondere 8 bis 12 mm hat. In diesem Bereich ist es bevorzugt, dass die Innenhülse nicht vollständig zylindrisch ausgebildet ist, sondern beispielsweise einen oder mehrere Schlitze aufweist, um klemmend am Lenker fixiert werden zu können. Es sind jedoch auch andere Verbindungen zwischen dem Fixierelement und der Innenhülse möglich, welche jedoch nicht beansprucht werden. Beispielsweise könnte das Fixierelement unmittelbar auf dem Lenker fixiert werden und eine Verbindung zur Innenhülse über Stifte, Stege oder dergleichen erfolgen, die im Wesentlichen in Längsrichtung des Fahrradgriffs verlaufen. Auch sind Kombinationen derartiger Fixiervarianten möglich.

Erfindungsgemäß weist das Greifelement an einem Außenbereich, das heißt an einem im montierten Zustand des Downhill-Fahrradgriffs außen angeordneten Bereich einen größeren Umfang als an einem Innenbereich auf. Der Innenbereich ist entsprechend im montierten Zustand des Fahrradgriffs der nach innen weisende Bereich des Fahrradgriffs. Die beiden Innenbereiche eines Fahrradgriffpaars weisen somit in montiertem Zustand aufeinander zu. Durch eine Vergrößerung des Umfangs im Äußeren Bereich kann das Griffelement in diesem Bereich dicker ausgestaltet sein. Hierdurch können die Dämpfungseigenschaften des Griffelements verbessert werden. Dies führt dazu, dass die Greifkraft weniger schnell nachlässt. Dies liegt insbesondere darin begründet, dass der im Bereich des kleinen Fingers im Handballen verlaufende Ulnarnerv geschont wird. Der erfindungsgemäße Downhill-Fahrradgriff weist somit einen hohen Komfort bei guten Dämpfungseigenschaften auf. Da der Umfang im Innenbereich des Greifelements erfindungsgemäß geringer ist als im äußeren Bereich wird der Fahrradgriff in diesem Bereich vom Fahrradfahrer gut umgriffen. Es handelt sich hierbei um den Bereich, in dem Daumen und Zeigefinger den Fahrradgriff umgreifen. Nur durch ein gutes Umgreifen ist ein sicheres Halten des Fahrradgriffs insbesondere beim Downhillfahren gewährleistet. Durch die erfindungsgemäße Kombination eines dickeren Außenbereichs mit einem dünneren Innenbereich des Greifelements kann somit der Komfort bei hoher Greifsicherheit erhöht werden.

Bei dem erfindungsgemäßen Downhill-Fahrradgriff ist das Greifelement zu einer Grifflängsachse rotationssymmetrisch ausgebildet. Hierdurch ist die Greifsicherheit weiter verbessert. Auch ist die Montage hierdurch vereinfacht. Im Bereich des Fixierelements können mit dem Greifelement beispielsweise Ansätze oder Fortsätze verbunden sein, die beispielsweise das Fixierelement teilweise überdecken.

Des Weiteren ist es bei der Ausbildung des Greifelements bevorzugt, dass der Umfang des Greifelements von außen nach innen stetig, das heißt stufenfrei abnimmt. Hierdurch kann der Benutzer den Downhill-Fahrradgriff in Längsrichtung in unterschiedlichen Positionen, das heißt beispielsweise weiter innen oder weiter außen greifen. Die Außenfläche des Greifelements könnte in einer nicht beanspruchten Variante, leicht konvex oder konkav ausgebildet sein. Bevorzugt ist eine kontinuierliche Abnahme des Umfangs von außen nach innen. Das Greifelement ist daher erfindungsgemäss konisch ausgebildet bzw. läuft zum Innenbereich konisch zu.

Bei dem erfindungsgemäßen Downhill-Fahrradgriff umgibt das Fixierelement einen Klemmbereich der Innenhülse zumindest teilweise. Erfindungsgemäss erfolgt daher ein klemmen der Innenhülse auf dem Fahrradlenker. Die Innenhülse ist im Bereich des Klemmbereichs vorzugsweise geschlitzt und/oder umgibt den Fahrradlenker in montiertem Zustand nur teilweise.

Das Fixierelement ist erfindungsgemäß an einer Innenseite des Fahrradgriffs angeordnet. Das Fixierelement weist somit in montiertem Zustand nach innen. Beziehungsweise die beiden Fixierelemente eines Fahrradgriffpaars weisen in montiertem Zustand aufeinander zu. In dem Außenbereich des Fahrradgriffs ist kein Fixierelement angeordnet. An den Fahrradgriffen ist erfindungsgemäß nur ein einziges Fixierelement vorgesehen, das an der Innenseite des Fahrradgriffs angeordnet ist. Dies hat den wesentlichen Vorteil, dass der Fahrer den Griff weit außen greifen kann und auch in diesem Bereich noch eine entsprechende Dämpfung aufgrund des Greifelements gewährleistet ist. Ein an der Außenseite vorgesehenes Fixierelement wäre störend und würde nicht mehr dämpfen.

Das Fixierelement kann als Klemmelement ähnlich einer Schelle ausgebildet sein. Bei einer derartigen Ausführungsform weist das Klemmelement ein Befestigungselement wie eine Schraube, einen Hebel, einen Exzenter oder dergleichen auf. Da das Greifelement in bevorzugter Ausführungsform rotationssymmetrisch ausgebildet ist und ein Downhill-Fahrradgriff kein Barend oder dergleichen aufweist, treten trotz des intensiven Einsatzes bei Downhillfahrten und den großen Belastungen nur relativ geringe Drehmomente auf. Insofern ist es möglich, das Befestigungselement mit einem relativ geringen Drehmoment zu fixieren. Bei dem erfindungsgemäßen Fahrradgriff sind Drehmomente im Bereich von ca. 3 Nm ausreichend.

In einer besonders bevorzugten Ausführungsform weist der erfindungsgemäße Downhill-Fahrradgriff im Außenbereich einen Durchmesser von 30 bis 34 mm, insbesondere 30 bis 32 mm auf. Im Innenbereich weist das Greifelement einen Durchmesser von 28 bis 30 auf, insbesondere 29 bis 30 mm. Die Länge des Greifelements liegt vorzugsweise im Bereich von 80 bis 120 mm. Die Konizität beträgt somit auf einer Länge von 80 bis 120 mm in bevorzugter Ausführungsform 1 bis 3 und besonders bevorzugt nur 1 bis 2 mm.

Nachfolgend wird die Erfindung anhand einer bevorzugten Ausführungsform und Bezugnahme auf die anliegenden Zeichnungen erläutert.

Es zeigen:
- Fig. 1: einen schematischem Längsschnitt eines Downhill-Fahrradgriffs und
- Fig. 2: eine schematische Draufsicht eines Fixierelements.

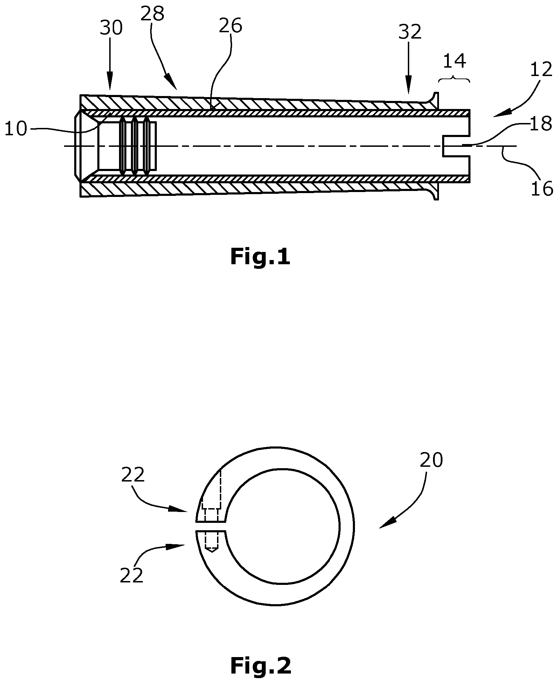

Der Downhill-Fahrradgriff weist eine Innenhülse 10 aus hartem Kunststoffmaterial wie beispielsweise PP-GF auf. Die Innenhülse 10 ist zylindrisch ausgebildet und weist einen Innendurchmesser auf, der im Wesentlichen dem Außendurchmesser des Fahrradlenkers entspricht. Die Innenhülse 10 weist eine Innenseite 12, das heißt auf einer Seite die in montiertem Zustand nach innen in Richtung Lenkervorbau weist einen Klemmbereich 14 auf. Des Weiteren weist die Innenhülse 10 einen sich im dargestellten Ausführungsbeispiel in Längsrichtung 16 erstreckenden Klemmschlitz 18 auf. Hierdurch ist es mit Hilfe eines Fixierelements 20 wie einer Schelle (Fig. 2) möglich, den Innendurchmesser der Innenhülse 10 im Klemmbereich 14 zur klemmenden Fixierung auf einem Fahrradlenker zu verringern. Das im dargestellten Ausführungsbeispiel als Klemmelement ausgebildete Fixierelement 20 ist im dargestellten Ausführungsbeispiel ringförmig ausgebildet und weist zwei Verdickungen 22 auf, die einen Abstand zueinander haben. Mit Hilfe eines als Schraube ausgebildeten Befestigungselements kann dieser Abstand verringert und hierdurch der Innendurchmesser des Fixierelements 20 verringert werden.

Auf einer Außenseite 26 der Innenhülse 10 ist ein Greifelement 28 angeordnet. Die Hülse 10 kann mit dem Greifelement 28 verklebt sein oder die Hülse 10 wird vom Greifelement 28, das aus einem weichen Kunststoffmaterial hergestellt ist, umspritzt. Zur sicheren Verbindung kann die Hülse 10 beispielsweise auch Vertiefungen oder Öffnungen aufweisen, in die das Material des Greifelements 28 eindringt. Als Material für das Greifelement 28 ist insbesondere TPE geeignet.

Das erfindungsgemäße Greifelement ist ausgehend von einem Außenbereich 30 zu einem Innenbereich 32 konisch ausgebildet. Hierdurch weist das Greifelement im inneren Bereich, in dem das Greifelement von Daumen und Zeigefinger umgriffen wird, einen geringeren Außendurchmesser als im Außenbereich 30 auf, in dem das Greifelement vom kleinen Finger umgriffen wird. In diesem Bereich ist somit das Greifelement dicker, so dass eine bessere Dämpfung realisiert ist und der Ulnarnerv geschont wird.

Das Greifelement und somit der gesamte Downhill-Fahrradgriff ist zur GriffLängsachse 16 im Wesentlichen rotationssymmetrisch ausgebildet.

## Patentansprüche

1. Downhill-Fahrradgriff, mit
einer Innenhülse (10),
einem, die Innenhülse (10) umgebenden Greifelement (28) und
nur einem einzigen mit der Innenhülse (10) verbindbaren Fixierelement (20) zum Fixieren des Fahrradgriffs an einem Fahrradlenker,
wobei das Fixierelement (20) an einer Innenseite (12) des Fahrradgriffs angeordnet ist und einen Klemmbereich (14) der Innenhülse (10) zum Klemmen der Innenhülse (10) auf dem Fahrradlenker zumindest teilweise umgibt,
**dadurch gekennzeichnet, dass**
das Greifelement (28) über seine gesamte Länge zu einer GriffLängsachse (16) im Wesentlichen rotationssymmetrisch ausgebildet ist, wobei im Bereich des Fixierelements (20) mit dem Greifelement (28) Ansätze oder Fortsätze verbunden sein können und das Greifelement (28) an einem Außenbereich (30) einen größeren Umfang als an einem Innenbereich (32) aufweist, so dass das Greifelement (28) ausgehend von dem Außenbereich (30) zu dem Innenbereich (32) konisch ausgebildet ist, wobei der Innenbereich (32) von Daumen und Zeigefinger und der Außenbereich (30) vom kleinen Finger umgriffen wird.

2. Downhill-Fahrradgriff nach Anspruch 1, **dadurch gekennzeichnet, dass** der Umfang vom Außenbereich (30) zum Innenbereich (32) stetig abnimmt.

3. Downhill-Fahrradgriff nach Anspruch 1 oder 2, **dadurch gekennzeichnet, dass** der Umfang des Greifelements (28) vom Außenbereich (30) zum Innenbereich (32) kontinuierlich abnimmt.

4. Downhill-Fahrradgriff nach einem der Ansprüche 1 bis 3, **dadurch gekennzeichnet, dass** das Fixierelement (20) ein Befestigungselement zur Fixierung aufweist.

## Claims

1. A downhill grip for a bicycle, comprising
an inner sleeve (10),
a grip element (28) enclosing the inner sleeve (10), and
only a sole fixing element (20) connectible to the inner sleeve (10), for fixing the bicycle grip to a bicycle handlebar,
wherein the fixing element (20) is arranged on an inner side (12) of the bicycle grip and at least partially surrounds a clamping region (14) of the inner sleeve (10) for clamping the inner sleeve (10) on the bicycle handlebar,
**characterized in that**
the grip element (10) is designed to be substantially rotationally symmetric with respect to a grip longitudinal axis (16) over its entire length, wherein tabs and protrusions can be connected with the grip element (18) in the region of the fixing element (20) and the grip element (28) has a larger circumference in an outer region (30) than in an inner region (32) so that the grip element (10) has a conically tapering shape from the outer region (30) to the inner region (32), the inner portion (32) being gripped by the thumb and the index finger and the outer portion (30) being gripped by the small finger.

2. The downhill grip for a bicycle according to claim 1, **characterized in that** the circumference of the grip element (10) decreases from the outer region (30) to the inner region (32) in a smooth manner.

3. The downhill grip for a bicycle according to claim 1 or 2, **characterized in that** the circumference of the grip element (10) decreases from the outer region (30) to the inner region (32) in a continuous manner.

4. The downhill grip for a bicycle according to any one of claims 1 to 3, **characterized in that** the fixing element (20) comprises a fastening element (24) for fixation.

## Revendications

1. Poignée de vélo de descente, dotée d'une douille intérieure (10),
d'un élément de prise (28) entourant la douille intérieure (10) et
d'un unique élément de fixation (20) pouvant être relié à la douille intérieure (10) afin de fixer la poignée de vélo à un guidon de vélo,
dans laquelle l'élément de fixation (20) est disposé sur une face intérieure (12) de la poignée de vélo et entoure au moins partiellement une zone de serrage (14) de la douille intérieure (10) afin de serrer la douille intérieure (10) sur le guidon de vélo, **caractérisée en ce que**
l'élément de prise (28) est réalisé sur la totalité de sa longueur comme sensiblement symétrique en rotation par rapport à un axe longitudinal (16) de la poignée, dans laquelle des prolongements ou des pans peuvent être reliés à l'élément de prise (28)dans la zone de l'élément de fixation (20) et l'élément de prise (28) comporte sur une zone externe (30) une plus grande circonférence que sur une zone interne (32), de sorte que l'élément de prise (28) est réalisé comme conique de la zone extérieure (30) jusqu'à la zone intérieure (32), dans laquelle la zone intérieure (32) est entourée par le pouce et l'index et la zone extérieure (30) est entourée par l'auriculaire.

2. Poignée de vélo de descente selon la revendication 1, **caractérisée en ce que** la circonférence diminue de façon constante de la zone extérieure (30) à la zone intérieure (32) .

3. Poignée de vélo de descente selon la revendication 1 ou 2, **caractérisée en ce que** la circonférence de l'élément de prise (28) diminue de façon continue de la zone extérieure (30) à la zone intérieure (32).

4. Poignée de vélo de descente selon l'une des revendications 1 à 3, **caractérisée en ce que** l'élément de fixation (20) comporte un élément de montage pour la fixation.
